(19) Europäisches Patentamt
European Patent Office
Office européen des brevets

(11) **EP 2 522 091 B1**

(12) **EUROPEAN PATENT SPECIFICATION**

(45) Date of publication and mention of the grant of the patent:
**30.07.2014 Bulletin 2014/31**

(21) Application number: **10788094.0**

(22) Date of filing: **16.12.2010**

(51) Int Cl.:
*H04J 14/02* (2006.01)    *H04Q 11/00* (2006.01)

(86) International application number:
**PCT/EP2010/069919**

(87) International publication number:
**WO 2011/083017 (14.07.2011 Gazette 2011/28)**

(54) **METHOD FOR MANAGING THE TRANSMISSION OF OPTICAL SIGNALS**

VERFAHREN ZUR VERWALTUNG DER ÜBERTRAGUNG OPTISCHER SIGNALE

PROCEDE DE GESTION DE LA TRANSMISSION DE SIGNAUX OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2010 FR 1000038**

(43) Date of publication of application:
**14.11.2012 Bulletin 2012/46**

(73) Proprietor: **Alcatel Lucent**
**75007 Paris (FR)**

(72) Inventors:
• **ZAMI, Thierry**
**F-91620 Nozay (FR)**
• **RIVAL, Olivier**
**F-91620 Nozay (FR)**

(74) Representative: **Mouney, Jérôme**
**Alcatel-Lucent International**
**Bâtiment Bourgognes**
**32 avenue Kléber**
**92707 Colombes Cedex (FR)**

(56) References cited:
**WO-A2-02/071670**

• **RAMAMURTHY B ET AL: "Transparent vs. opaque vs. translucent wavelength-routed optical networks", OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999; [OPTICAL FIBER COMMUNICATION CONFERENCE / INTERNATIONAL CONFERENCE ON INTEGRATED O, vol. 1, 21 February 1999 (1999-02-21), pages 59-61, XP010334565, ISBN: 978-0-7803-5430-2**

**Description**

The present invention relates to the field of communication networks, and more particularly transparent networks, meaning those which enable the propagation of the signal along the entire connection without systematically regenerating the signal within the network's nodes.

Transparent networks are rapidly growing owing to their many advantages over opaque networks, meaning those which require signal regeneration, involving a dual optical-electrical-optical conversion in each node of the network along a connection. The use of transparent connections makes it possible to overcome restrictions related to regenerating signals, such as processing the modulation format or the bit-rate of the wavelength division multiplexed channels, and consequently, to reduce the network's operating costs.

Nonetheless, planning transparent connections is difficult, because it involves estimating the degradations suffered by the signal along the connection. This is because in order to ensure a signal quality level at the destination, the planning must take into account all of the parameters that could degrade the signal's quality over the course of the transmission

Furthermore, these influence parameters may vary over time; for example the presence or absence of signals on a channel adjacent to the connection significantly modifies the non-linear effects suffered by the signal. Also, the addition or removal of the connection within the network may cause these parameters to vary at any time, and lead to the need to regenerate the signal or restore the connection.

One way of overcoming these problems is to always assume the least favorable situation, meaning the situation which causes the most degradation.

However, firstly, the least favorable situation is not always easy to estimate because changing some influence parameters may have consequences on the other parameters; for example, reducing the power of the transmitted channel reduces the impact of the non-linear effects, but degrades the signal-to-noise ratio.

Secondly, assuming the least favorable situation greatly reduces the distances that can be achieved with transparent connections, and consequently the network's operating costs, which may bring into question the advantages of transparent networks as compared to more conventional networks like opaque networks.

The article "Transparent vs. opaque vs. translucent wavelength-routed optical networks" by B. Ramamurthy et al., proc. OFC/IOOC '99, vol. 1,21 February 1999, pages 59-61 describes a wavelength-routed optical network which consists of multi-wavelength crossconnect switches which are interconnected by optical fibers and explores transparent, versus opaque connections. A combined approach is described as translucent network, where a signal from the source travels through the network "as far as possible" before its quality, i.e. its bit-error rate (BER), degrades, thereby requiring it to be regenerated at an intermediate node. The same signal could be regenerated several times in the network before it reaches the destination.

WO2002071670A2 describes a method and a system for performing pre-emphasis of one or more optical channels respectively carrying one or more optical signals, by effecting bit rate of the one or more of the signals, thereby adjusting BER value thereof.

The purpose of the present invention is therefore to overcome the aforementioned drawbacks of the state of the art and to disclose a method making it possible to accept a degradation in the quality of a transparent connection's signal without having to restore the connection.

Thus, the present invention relates to a method for managing the transmission of optical signals within an optical communication network comprising transparent connections and opaque connections established between the network's nodes, said connections being configured to transmit, at predetermined bit-rates, a set of data packets without any temporal relationship between them wherein the bit-rate of a transparent connection is modified as a function of the signal quality of said transparent connection within the destination node, said modification of the bit-rate comprising the following steps:

- the switching of all of the data packets transmitted by the transparent connection at a first bit-rate to an opaque connection with the same bit-rate,
- the changing of the transparent connection's bit-rate from a first bit-rate to a second bit-rate,
- the switching of at least some of all the data packets transmitted by the opaque connection back to the transparent connection at the second bit-rate.

According to another embodiment, the modification of a transparent connection's bit-rate is triggered when the signal's quality within the destination node is less than a first threshold or greater than a second threshold for a predetermined duration over a predetermined interval of time.

According to an additional embodiment, the data rate is reduced when the signal's quality is less than a first predefined threshold ($BER_S$) for a predefined duration over a predefined interval of time, and is increased when the signal's quality is greater than a second predefined threshold (BERQ) for a predefined duration over a predefined interval of time.

According to an additional embodiment, the modification of the transparent connection's bit-rate from a first bit-rate to a second bit-rate comprises the following steps:

if the bit-rate is greater than a minimum predefined bit-rate for a predefined duration over a predefined interval of time, or respectively less than a maximum predefined bit-rate for a predefined duration over a predefined interval of time,
- the bit-rate is reduced, or respectively increased, by a predefined quantity,
- the signal's quality within the destination node is measured based on the service signals transmitted by said transparent connection,
- if the measured signal quality is greater than the first predefined threshold, or respectively less than the second predefined threshold, said transparent connection's bit-rate is fixed to the obtained bit-rate; otherwise, the preceding steps are repeated.

According to another embodiment, the signal's quality is determined by measuring the bit error rate, the signal's quality being improved, or respectively degraded, when the bit error rate decreases, or respectively increases.

According to an additional embodiment, whenever the bit-rate is less than the predefined minimum bit-rate, the connection is restored.

According to an additional embodiment, whenever the bit-rate is greater than or equal to the predefined maximum bit-rate, the connection is not modified.

According to another embodiment, whenever a connection's bit-rate is reduced, the data packets corresponding to the difference in bit-rate are transmitted by an opaque connection.

The present invention also relates to a device for transmitting an optical communication network's optical signals comprising means adapted to:

- generate an optical signal,
- receive an optical signal,
- regenerate a signal,
- transmit a set of data packets without any temporal relationship between them at predetermined bit-rates over a transparent or opaque connection linking together means of generating the signal and means of.receiving the signal,
- measure the signal's quality within the means of receiving the signal,
- modify a transparent connection's bit-rate as a function of the signal's quality measured within the means of receiving a signal comprising means adapted to:

    - switch all of the data packets transmitted by the transparent connection at a first bit-rate to an opaque connection with the same bit-rate,
    - modify the transparent connection's bit-rate from a first bit-rate to a second bit-rate,
    - switch at least some of the data packets transmitted by the opaque connection back to the transparent connection at the second bit-rate.

According to another embodiment, the means for modifying the transparent connection's bit-rate comprise means adapted to:

- compare the value of the connection's bit-rate with at least one extreme predefined bit-rate value,
- modify the transparent connection's bit-rate by a predefined quantity,
- generate and transmit service signals over said transparent connection,
- determine the signal's quality over said transparent connection from the service signals,
- compare the signal's quality measured from the service signals with predefined signal quality thresholds,
- select the transparent connection's new bit-rate as a function of the determined signal quality over said transparent connection on the service signals.

According to an additional embodiment, the means for modifying the transparent connection's bit-rate by a predefined quantity comprise adaptive bit-rate transponders.

Other characteristics and benefits of the invention will become apparent from the following description, given with reference to the attached drawings, which by way of a nonlimiting example depict one possible embodiment.

In these drawings:

- Figure 1 depicts a diagram of part of an optical communication network;
- Figure 2 represents a diagram of an example bit error rate change over a transparent connection;
- Figure 3 represents a diagram of an example bit error rate change over a transparent connection;
- Figure 4 depicts a diagram of the changes in bit-rates of the connections used as a function of the bit error rate measured at the destination, according to the embodiments of the present invention;
- Figure 5 depicts a flow chart of the various steps of the method for adapting a transparent connection's bit-rate as a function of the bit error rate according to the embodiments of the present invention;

In the following description, generally:

The term "transparent connection" corresponds to the transmission of data only optically, meaning without regenerating the signal, from a source node to a destination node.

The term "opaque connection" corresponds to the transmission of data from a source node to a destination node over optical connections in which the optical connection is converted into electrical signals within at least one of the intermediary nodes.

The embodiments of the present invention relate to the modification of a transparent connection's bit-rate when the signal quality at the destination degrades in order to prevent the restoration of said transparent connection.

This is because a connection's bit-rate significantly influences the quality of the signal at the destination, such that the lower the bit-rate is, the better it tolerates degradations suffered along the connection. Furthermore, the recent development of adaptive bit-rate transponders, also known as agile transponders, makes it possible to select an optical signal's transmission bit-rate. Nonetheless, adapting the connection's bit-rate may be done directly, due among other things to various technical problems like clock recovery.

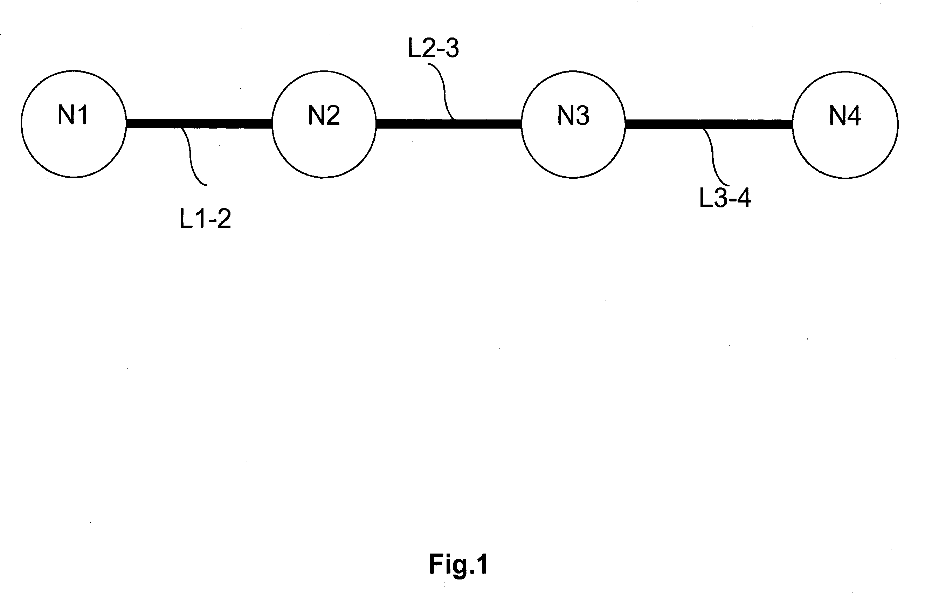

Figure 1 depicts a part of a network comprising four nodes (N1, N2, N3, and N4) connected to one another by optical links ($L_{1-2}$, $L_{2-3}$, and $L_{3-4}$).

The nodes comprise optical distributors, opto-electrical and electro-optical conversion means, as well as an electric router. Thus, the signals received by a node may be routed optically, meaning transparently, to another node of the network, regenerated and then retransmitted to another node of the network or transmitted to the node's receivers to be processed.

The optical links comprise a plurality of wavelength division multiplexed channels making it possible to transmit signals on a plurality of connections.

According to one embodiment of the present invention, the channels are separated into two groups: the channels corresponding to transparent connections and the channels corresponding to opaque connections.

When planning a connection C1 between the nodes N1 and N4 for example, the control plane determines the degradations suffered by the signal between the nodes N1 and N4 in order to deduce the signal quality obtained at the destination. This determination may be made compared with data concerning previous connections on the optical path of the connection C1, or by measuring the signal quality at the destination (i.e. within the node N4) on service signals sent over the connection C1 and corresponding to actual conditions (and not the least favorable situation that may be encountered over the optical path of connection C1).

Depending on the estimated signal quality, the control plane determines whether the connection can be created transparently, i.e. without regeneration within nodes N2 or N3.

If it can, a transparent connection C1 between the adaptive bit-rate transponders T1 and T4 respectively located within the nodes N1 and N4 is established.

Once the connection has been established, the quality of the signal received within the node N4 is measured. Generally, the bit error rate (BER) is what is measured. This bit error rate is generally defined compared with the quality factor (Q factor, or Q for short) by the relationship:

$$BER = \frac{1}{2} erfc \left( \frac{Q}{\sqrt{2}} \right)$$

$$erfc(x) = \frac{2}{\sqrt{\Pi}} \int_{x}^{\infty} e^{-t^2} dt$$

where

x and t are variables.

The signal's quality (generally defined by the quality factor Q) is therefore improved whenever the bit error rate decreases, and is degraded whenever the bit error rate increases.

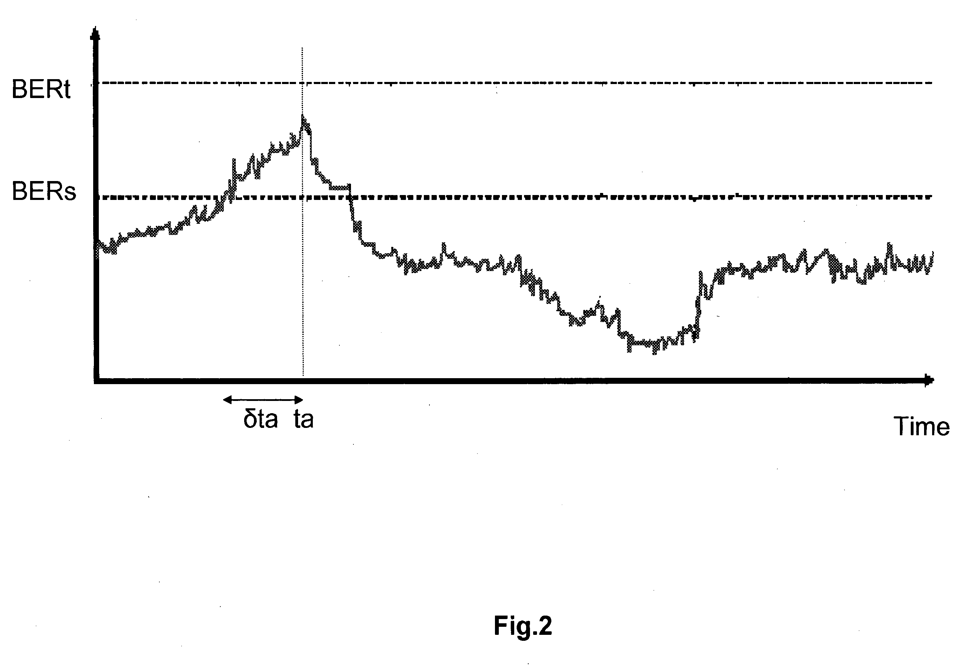

Figure 2 represents an example measurement of the bit error rate over time.

If the bit error rate is greater than a loss threshold $BER_T$ above which the signal can no longer be correctly retrieved at the destination, the connection is restored. The restoration will correspond to modifying at least one parameter of the connection making it possible to obtain better signal quality at the destination, for example by introducing a regeneration within the node N3, this modification generally requiring suspending the connection and determining the control plane anew in order to take into account the new degradations suffered along the connection.

Nonetheless, such a restoration goes along with a loss of data that is harmful to the network's performance.

According to one embodiment of the present invention, the bit error rate threshold $BER_S$ corresponding to a maximum acceptable threshold is introduced. This threshold $BER_S$ is less than the loss threshold $BER_T$ and corresponds to a trigger threshold so that if the threshold is exceeded during a predefined duration $\delta t_A$ within an interval of time $\Delta t_A$ as is true at the moment $t_A$ in Figure 2, a process of reducing the transparent connection's bit-rate is triggered.

By reducing the bit-rate of the connection whose bit error rate is greater than a maximum acceptable threshold $BER_S$, the goal is to lower the bit error rate to a level less than that maximum acceptable threshold $BER_S$.

Furthermore, modifying the bit-rate of the connection cannot be done instantaneously, so defining a $BER_S$ threshold makes it possible to modify the connection's bit-rate before the loss threshold $BER_T$ is reached, and therefore makes it possible to avoid a loss of data.

According to the embodiments of the present invention, modifying the bit-rate of a transparent connection comprises the following steps:

- Switching the data transmitted by the transparent connection C1 at a bit-rate D1 to an opaque connection C2 with the same bit-rate D1 (the connection C2 also linking to nodes N1 and N4 but regenerating the signals within the nodes N2 and N3).

The network's links comprising both a set of channels intended for transparent connections and a set of channels intended for opaque connections, the data is switched from a transparent connection C1 to an opaque connection C2. It should be noted that the distribution of the channels corresponding to the transparent connections and the opaque connections may be modified in order to optimize the network's operation, with the purpose nonetheless being to minimize the proportion of opaque connections as much as possible.

- Modifying the bit-rate of the transparent connection C1. This modification is done in increments $\Delta D$ (the increment $\Delta D$ may be an absolute increment or relative percentage increment of the bit-rate D1) by reconfiguring the adaptive bit-rate transponders T1 and T4 transmitting and receiving the signals of the connection C1. Once the bit-rate has been reduced, service signals are sent along the connection 1 by the transponder T1 in order to determine the bit error rate of the connection within the transponder T4 at the new bit-rate. If this data error rate is satisfactory, meaning less than $BER_S$ the obtained bit-rate is selected. Otherwise, the bit-rate is reduced repeatedly until a bit error rate less than $BER_S$ has been achieved.

Furthermore, the extent of the accepted bit-rates may be limited so that if a bit-rate less than or equal to the minimum permissible bit-rate is achieved when modifying the bit-rate of the connection C1, the connection would then be restored by the control plane.

Once a bit-rate D2 corresponding to a bit error rate less than $BER_S$ has been achieved, the transponders T1 and T4 are configured to transmit and receive at a bit-rate D2. The control plane is then informed that the transponders T1 and T4 are ready to establish the connection C1 at the bit-rate D2. - Part of the data transmitted by the opaque connection C2 is then switched back to the connection C1. As the bit-rate of the connection C1 has been reduced, the connection C1 cannot transmit the same quantity of data as before. The quantity of the data switched back corresponds to the maximum quantity that may be transmitted at the new bit-rate D2.

The quantity of data corresponding to the difference in bit-rate D1-D2 is transmitted by the opaque connection C2 at the bit-rate D1-D2.

After the data has switched back to the connection C1, the proportion of data transmitted by an opaque connection is relatively low compared to the quantity of data corresponding to the initial transparent connection C1, meaning at the bit-rate D1.

Additionally, introducing the trigger threshold $BER_S$ makes it possible to avoid data losses when changing the bit-rate.

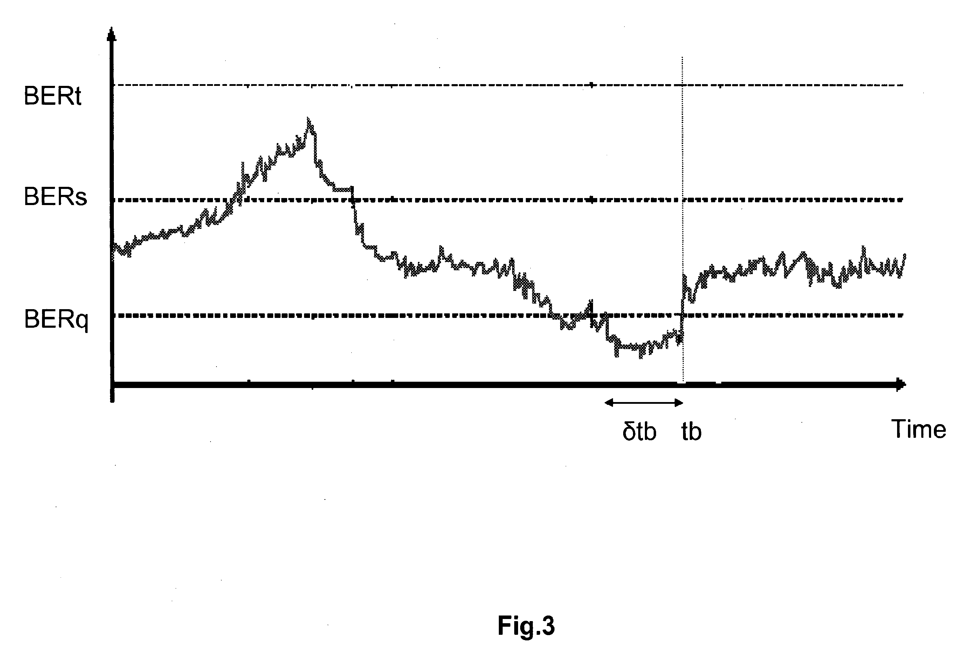

Furthermore, in order to prevent the data transmitted by opaque connections from accumulating, a second bit error rate threshold $BER_Q$ corresponding to a "comfort" threshold or minimum threshold, meaning a threshold for which the margin compared to the BERs thresholds, is high enough to be able to increase the corresponding transparent connection's bit-rate and thereby transfer data transmitted by an opaque connection to that transparent connection. Thus, if the bit error rate measured within the node N4 is less than the threshold $BER_Q$ for a predefined duration $\delta t_B$ within an interval of time $\Delta t_B$ as is the case at the moment $t_B$ in Figure 3, a process of increasing the transparent connection's bit-rate is triggered.

In the same manner, the data transmitted by the transparent connection is switched to an opaque connection with the same bit-rate, then the transparent connection's bit-rate is adjusted in increments until a bit error rate greater than the threshold $BER_Q$ but less than $BER_S$ has been achieved, this bit error rate being measured on service signals transmitted over the transparent connection.

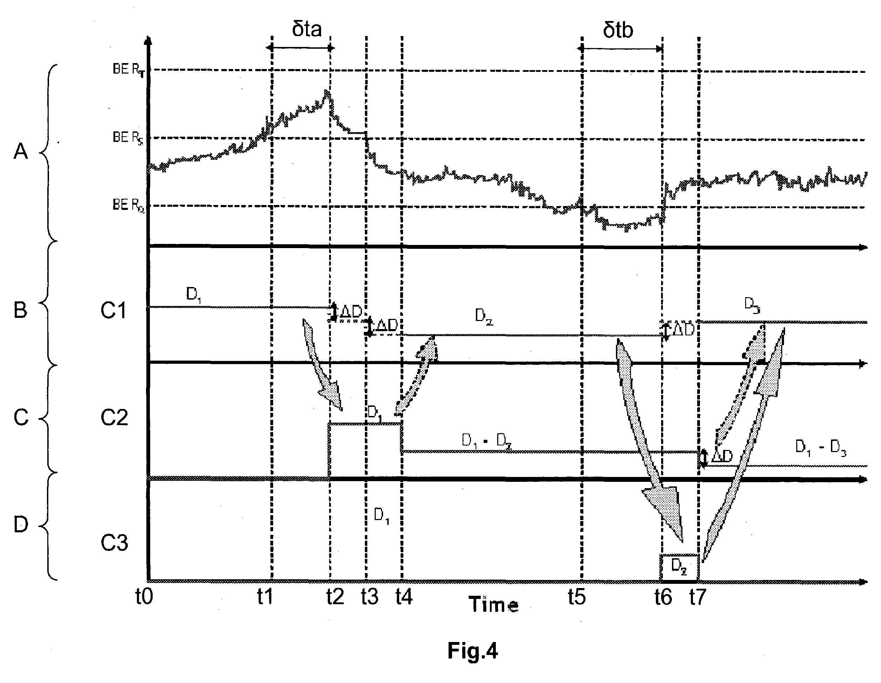

Figure 4 describes the change in the capacity of the various connections used over time as a function of the change in the bit error rate shown in Figures 2 and 3. The figure may be subdivided into four parts from top to bottom:

- a first part A corresponding to the bit error rate measured on the transparent connection C1,
- a second part B corresponding to the bit-rate of the transparent connection C1,
- a third part C corresponding to the bit-rate of the opaque connection C2,
- a fourth part D corresponding to the bit-rate of an opaque connection C3.

At the moment $t_0$, the transmission of signals at the bit-rate D1 by the transparent connection C1 is initiated. At the moment $t_1$, the bit error rate measured on the connection C1 becomes greater than the threshold $BER_S$. As described above, the variations in the bit error rate may have various causes, such as the addition of new connections on channels adjacent to the connection C1. At the moment $t_2$, the bit error rate has remained greater than $BER_S$ for the predetermined duration $\Delta t_A$, the process of reducing the bit-rate of the connection C1 is therefore triggered. Thus, the data transmitted by C 1 is switched to the opaque connection C2 whose bit-rate becomes D1, and service signals (shown as dotted lines) are transmitted along the connection C1 whose bit-rate is reduced by a quantity $\Delta D$. After the bit-rate is reduced by $\Delta D$, the bit error rate is still greater than the threshold $BER_S$, the bit-rate is therefore again reduced by $\Delta D$ at the moment t3. This new reduction in bit-rate enables the bit error rate to fall back below the threshold $BER_S$. The achieved bit-rate D2 is therefore selected as the new bit-rate for the connection C1 and, at the moment t4, some of the data corresponding to a bit-rate D2 is switched back from the opaque connection C2 to the transparent connection C1. The bit-rate of the connection C2 is then D1-D2.

At the moment $t_5$, the bit error rate falls below the threshold $BER_Q$. At the moment $t_6$, the bit error rate has remained less than $BER_Q$ for the predetermined duration $\delta t_B$, the process of increasing the bit-rate of the connection C1 is therefore triggered. Thus, the data transmitted by C 1 is switched to the opaque connection C3 whose bit-rate becomes D2, and service signals (shown as dotted lines) are transmitted along the connection C1 whose bit-rate is reduced by a quantity $\Delta D$. This quantity is sufficient to cause the bit error rate to reach a threshold greater than $BER_{Q\ again}$. Increasing the bit-rate makes it possible, at the moment $t_7$, not only to retrieve the data transmitted by the connection C3, but also a portion of the data transmitted by the connection C2 and corresponding to increasing the bit-rate of the connection C1. The new bit-rate of the connection C1 is therefore D3 and the bit-rate of the connection C2 becomes D1-D3. Additionally, it should be noted that the connections C2 and C3 may be combined into a single connection if that connection's capacity allows.

Thus, by reserving part of the transmission channels for opaque connections and by using these connections in a sporadic and/or limited fashion, the embodiments of the present invention makes it possible to adjust a transparent connection's bit-rate as a function of the bit error rate measured at the destination.

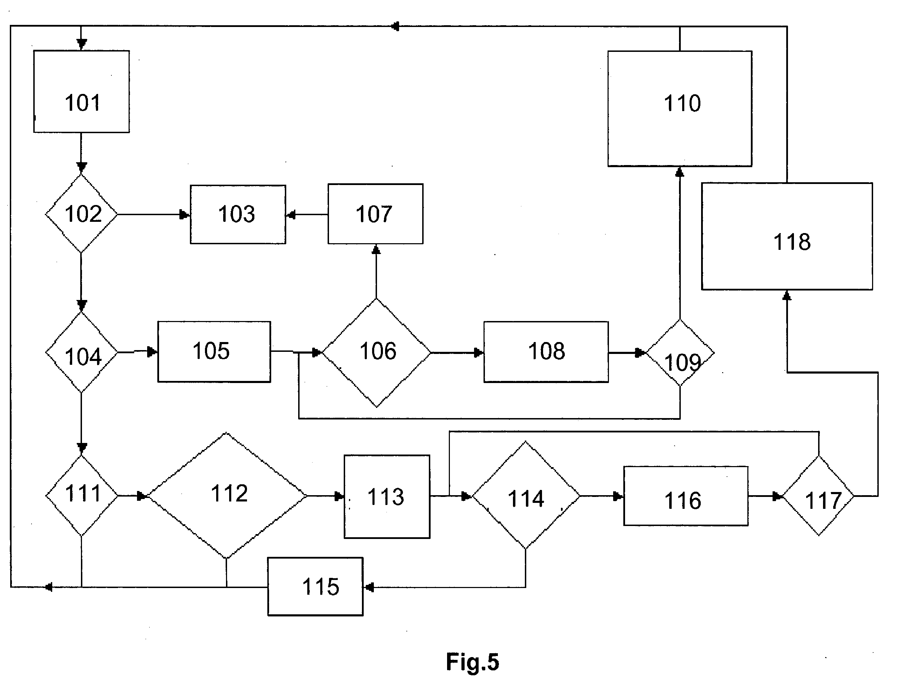

Figure 5 depicts a flowchart of the various steps of implementing the previously described method.

The step 101 corresponds to monitoring the bit error rate of a transparent connection C1 whose bit-rate is D1.

The step 102 corresponds to comparing the measured bit error rate with the threshold $BER_T$. If the measured bit error rate is greater than the threshold $BER_T$, a restoration of the connection C1 is triggered (step 103); otherwise, the measured bit error rate is compared with the threshold $BER_S$ (step 104). If the measured rate is greater than $BER_S$, the data is switched from the transparent connection C1 to an opaque connection C2 (step 105). The initial bit-rate D1 of the connection C1 is retrieved (D=D1) and the value (D-$\Delta Da$) is compared to the minimum bit-rate threshold $D_{min}$ (step 106), $\Delta Da$ being a predetermined bit-rate increment. If the value (D-$\Delta Da$) is less than $D_{min}$, the connection C2 is abandoned (step 107) and the connection C1 is restored (step 103); otherwise, the bit-rate of the connection C1 is reduced by $\Delta Da$ (D=D-$\Delta da$) (step 108) and the measured bit error rate is compared to the threshold $BER_S$ (step 109). If the measured rate is greater than $BER_S$ (generally for a predefined duration $\delta ta$ over an interval $\Delta ta$), the process returns to step 106, otherwise a part of the data transmitted by the connection C2 is switched back to the connection C1 (step 110), then the process returns to step 101, the proportion of the data switched back being a function of the new bit-rate D of the connection C1, the data not switched back being transmitted by the connection C2 whose bit-rate is adjusted to the value (D1-D).

In step 104, if the bit error rate is less than $BER_S$, the bit error rate is then compared to threshold $BER_Q$ (generally for a predefined duration $\delta tb$ over an interval $\Delta t$) (step 111). If the bit error rate is greater than $BER_Q$, the process returns to step 101; otherwise, the presence of opaque connections on the path of the transparent connection C1 is determined (step 112). If no opaque connection is found, the process returns to step 101; otherwise, the data of the connection C1 is switched to an opaque connection C3 (step 113). Next, the bit-rate D1 of the connection C1 is retrieved (D=D1) and the value (D+$\Delta Db$) is compared to the maximum bit-rate $D_{max}$ (step 114), $\Delta Db$ being a predetermined bit-rate increment. If the value (D+$\Delta Db$) is greater than $D_{max}$, the connection C3 is abandoned (step 115) and the process returns to step 101; otherwise, the bit-rate of the connection C1 is increased by $\Delta Db$ (D=D+$\Delta Db$) (step 116) and the measured bit error rate is compared to the threshold $BER_Q$ (step 117). If the measured rate is less than $BER_Q$, the process returns to step 114; otherwise, the data transmitted by the connection C3 and at least some of the data transmitted by one (or more) opaque connections detected in step 112 is switched back to the connection C 1 (step 118), then the process returns to step 101, the proportion of data switched back being a function of the new bit-rate D of the connection C1.

Thus, by momentarily switching the data transmitted by a transparent connection to an optical connection, the embodiments of the present invention make it possible to modify the bit-rate of a transparent connection in order to make it possible to adjust to the network's constraints that could modify the degradations suffered by a connection. Additionally, introducing a $BER_S$ threshold triggering a reduction in the bit-rate of a connection whose level is less than the loss threshold $BER_T$ makes it possible to modify the bit-rate of a transparent connection without needing to restore that connection, and therefore makes it possible to avoid data losses that accompany such a restoration. Additionally, introducing a threshold $BER_Q$ makes it possible to reduce the quantity of data transmitted by opaque connections. Thus, implementing the previously described method makes it possible to increase the network's flexibility and to achieve connections which are more robust against the degradations suffered along the optical path.

## Claims

1. A method for managing the transmission of optical signals within an optical communication network comprising transparent connections and opaque connections established between the network's nodes, said connections being configured to transmit, at predetermined bit-rates, a set of data packets without any temporal relationship between them, wherein the bit-rate of a transparent connection is modified as a function of the signal quality of said transparent connection within the destination node, said method being **characterised by** said modification of the bit-rate comprising the following steps:

- the switching of all of the data packets transmitted by the transparent connection at a first bit-rate to an opaque connection with the same bit-rate (105, 113),
- the changing of the transparent conhection's bit-rate from a first bit-rate to a second bit-rate,
- the switching of at least some of all the data packets transmitted by the opaque connection back to the transparent connection at the second bit-rate (110, 118).

2. A method according to claim 1 wherein the modification of a transparent connection's bit-rate is triggered when the signal's quality within the destination node is less than a first threshold or greater than a second threshold for a predetermined duration over a predetermined interval of time (104, 111).

3. A method according to claim 2 wherein the bit-rate is reduced when the signal's quality is less than a first predefined threshold ($BER_S$) for a predefined duration over a predefined interval of time, and is increased when the signal's quality is greater than a second predefined threshold ($BER_Q$) for a predefined duration over a predefined interval of time.

4. A method according to claim 3 wherein the modification of the transparent connection's bit-rate from a first bit-rate to a second bit-rate comprises the following steps:

If the bit-rate is greater than a minimum predefined bit-rate for a predefined duration over a predefined interval of time, or respectively less than a maximum predefined bit-rate for a predefined duration over a predefined interval of time,

- the bit-rate is reduced (108), or respectively increased (116), by a predefined quantity,
- the signal's quality within the destination node is measured based on the service signals transmitted by said transparent connection (109, 117),
- if the measured signal quality is greater than the first predefined threshold, or respectively less than the second predefined threshold, said transparent connection's bit-rate is fixed to the obtained bit-rate; otherwise, the preceding steps are repeated over.

5. A method according to claim 4 wherein the signal's quality is determined by measuring the bit error rate, the signal's quality being improved, or respectively degraded, when the bit error rate decreases, or respectively increases.

6. A method according to claim 5 whenever the bit-rate is less than the predefined minimum bit-rate, the connection is restored (103).

7. A method according to claim 5 or 6, wherein whenever the bit-rate is greater than or equal to the predefined maximum bit-rate, the connection is not modified.

8. A method according to one of the preceding claims, wherein, whenever a connection's bit-rate is reduced, the data packets corresponding to the difference in bit-rate are transmitted by an opaque connection.

9. A device for transmitting an optical communication network's optical signals comprising:

- means for generating an optical signal,
- means for receiving an optical signal,
- means for regenerating the signal,
- means for transmitting a set of data packets without any temporal relationship between them at predetermined bit-rates over a transparent or opaque connection linking together the means for generating the signal and the means for receiving the signal,
- means for measuring the signal's quality within the means for receiving the signal,
- means for modifying a transparent connection's bit-rate as a function of the signal's quality measured within the means for receiving a signal, **characterised by** comprising:

- means for switching all of the data packets transmitted by the transparent connection at a first bit-rate to an opaque connection with the same bit-rate,
- means for modifying the transparent connection's bit-rate from a first bit-rate to a second bit-rate,
- means for switching at least some of the data packets transmitted by the opaque connection back to the transparent connection at the second bit-rate.

10. A device according to claim 9, wherein the means for modifying the transparent connection's bit-rate comprise:

- means for comparing the value of the connection's bit-rate with at least one extreme predefined bit-rate value,
- means for modifying the transparent connection's bit-rate by a predefined quantity,

- means for generating and transmitting service signals over said transparent connection,
- means for determining the signal's quality over said transparent connection from the service signals,
- means for comparing the signal's quality measured from the service signals with predefined signal quality thresholds,
- means for selecting the transparent connection's new bit-rate as a function of the determined signal quality over said transparent connection on the service signals.

11. A device according to claim 9 or 10 wherein the means for modifying the transparent connection's bit-rate comprise adaptive bit-rate transponders.

**Patentansprüche**

1. Verfahren zur Verwaltung der Übertragung von optischen Signalen innerhalb eines optischen Kommunikationsnetzwerks mit zwischen Netzwerkknoten aufgebauten transparenten und nichttransparenten Verbindungen, wobei die besagten Verbindungen dafür konfiguriert sind, bei vorbestimmten Bitraten einen Satz von Datenpaketen ohne jegliche zeitliche Beziehung zwischen ihnen zu übertragen, wobei die Bitrate einer transparenten Verbindung in Abhängigkeit von der Signalqualität der besagten transparenten Verbindung innerhalb des Zielknotens geändert wird, wobei das besagte Verfahren durch die besagte Änderung der Bitrate gekennzeichnet ist und die folgenden Schritte umfasst:

- Vermitteln aller bei einer ersten Bitrate über die transparente Verbindung übertragenen Datenpakete an eine nichttransparente Verbindung mit derselben Bitrate (105, 113)
- Ändern der Bitrate der transparenten Verbindung von einer ersten Bitrate in eine zweite Bitrate,
- Zurückvermitteln zumindest einiger aller über die nichttransparente Verbindung übertragenen Datenpakete an die transparente Verbindung bei einer zweiten Bitrate (110, 118).

2. Verfahren nach Anspruch 1, wobei die Änderung der Bitrate einer transparenten Verbindung ausgelöst wird, wenn die Signalqualität innerhalb des Zielknotens niedriger als ein erster Grenzwert oder höher als ein zweiter Grenzwert für eine vorbestimmte Dauer über ein vorbestimmtes Zeitintervall (104, 111) ist.

3. Verfahren nach Anspruch 2, wobei die Bitrate verringert wird, wenn die Signalqualität niedriger als ein erster vordefinierter Grenzwert (BER$_S$) für eine vordefinierte Dauer über ein vordefiniertes Zeitintervall ist, und erhöht wird, wenn die Signalqualität höher als ein zweiter vordefinierter Grenzwert (BER$_Q$) für eine vordefinierte Dauer über ein vordefiniertes Zeitintervall ist.

4. Verfahren nach Anspruch 3, wobei die Änderung der Bitrate der transparenten Verbindung von einer ersten Bitrate in eine zweite Bitrate die folgenden Schritte umfasst:

Wenn die Bitrate höher als eine minimale vordefinierte Bitrate für eine vordefinierte Dauer über ein vordefiniertes Zeitintervall bzw. niedriger als eine maximale vordefinierte Bitrate für eine vordefinierte Dauer über ein vordefiniertes Zeitintervall ist,

- wird die Bitrate um eine vordefinierte Menge verringert (108) bzw. erhöht (116),
- wird die Signalqualität innerhalb des Zielknotens auf der Basis des über die transparente Verbindung (109, 117) übertragenen Dienstsignals gemessen,
- wenn die gemessene Signalqualität höher als der erste vordefinierte Grenzwert bzw. niedriger als der zweite vordefinierte Grenzwert ist, wird die Bitrate der besagten transparenten Verbindung auf die erhaltene Bitrate festgelegt; anderenfalls werden die vorangehenden Schritte wiederholt.

5. Verfahren nach Anspruch 4, wobei die Signalqualität durch Messen der Bitfehlerrate ermittelt wird, wobei die Signalqualität verbessert bzw. vermindert wird, wenn die Bitfehlerrate abnimmt bzw. zunimmt.

6. Verfahren nach Anspruch 5, wobei die Verbindung wiederhergestellt wird (103), wenn die Bitrate niedriger als die vordefinierte minimale Bitrate ist.

7. Verfahren nach Anspruch 5 oder 6, wobei die Verbindung nicht geändert wird, wenn die Bitrate höher als oder gleich der vordefinierte(n) minimalen Bitrate ist.

8. Verfahren nach einem beliebigen der vorstehenden Ansprüche, wobei, wenn die Bitrate einer Verbindung verringert wird, die der Bitratendifferenz entsprechenden Datenpakete über eine nichttransparente Verbindung übertragen werden.

9. Vorrichtung zur Übertragung von optischen Signalen eines optischen Kommunikationsnetzwerks, umfassend:

- Mittel zum Erzeugen eines optischen Signals,
- Mittel zum Empfangen eines optischen Signals,
- Mittel zum Regenerieren des Signals,
- Mittel zum Übertragen eines Satzes von Datenpaketen ohne jegliche zeitliche Beziehung zwischen ihnen, bei vorbestimmten Bitraten über eine transparente oder eine nichttransparente Verbindung, welche die Mittel zum Erzeugen des Signals und die Mittel zum Empfangen des Signals miteinander verknüpft,
- Mittel zum Messen der Signalqualität innerhalb der Mittel zum Empfangen des Signals,
- Mittel zum Ändern der Bitrate einer transparenten Verbindung in Abhängigkeit von der innerhalb der Mittel zum Empfangen eines Signals gemessenen Signalqualität, **dadurch gekennzeichnet, dass** sie umfassen:

- Mittel zum Vermitteln aller der über die transparente Verbindung bei einer ersten Bitrate übertragenen Datenpakete an eine nichttransparente Verbindung mit derselben Bitrate,
- Mittel zum Ändern der Bitrate der transparenten Verbindung von einer ersten Bitrate in eine zweite Bitrate,
- Mittel zum Zurückvermitteln zumindest einiger der über die nichttransparente Verbindung übertragenen Datenpakete an die transparente Verbindung bei einer zweiten Bitrate.

10. Vorrichtung nach Anspruch 9, wobei die Mittel zum Ändern der Bitrate der transparenten Verbindung umfassen:

- Mittel zum Vergleichen des Wertes der Bitrate der Verbindung mit mindestens einem extremen vordefinierten Bitratenwert,
- Mittel zum Ändern der Bitrate der transparenten Verbindung um eine vordefinierte Menge,
- Mittel zum Erzeugen und Übertragen von Dienstsignalen über die besagte transparente Verbindung,
- Mittel zum Ermitteln der Signalqualität über die besagte transparente Verbindung aus den Dienstsignalen,
- Mittel zum Vergleichen der aus den Dienstsignalen gemessenen Signalqualität mit vordefinierten Signalqualitätsgrenzwerten,
- Mittel zum Auswählen der neuen Bitrate der transparenten Verbindung in Abhängigkeit von der über die besagte transparente Verbindung auf den Dienstsignalen ermittelten Signalqualität.

11. Vorrichtung nach Anspruch 9 oder 10, wobei die Mittel zum Ändern der Bitrate der transparenten Verbindung Transponder mit adaptive Bitrate umfassen.

**Revendications**

1. Procédé pour gérer la transmission de signaux optiques dans un réseau de communication optique comprenant des connexions transparentes et des connexions opaques établies entre les noeuds du réseau, lesdites connexions étant configurées pour transmettre, à des débits binaires prédéterminés, un ensemble de paquets de données sans aucune relation temporelle entre eux, dans lequel le débit binaire d'une connexion transparente est modifié en fonction de la qualité de signal de ladite connexion transparente dans le noeud de destination, ledit procédé étant **caractérisé en ce que** ladite modification du débit binaire comprend les étapes suivantes :

- la commutation de tous les paquets de données transmis par la connexion transparente à un premier débit binaire vers une connexion opaque ayant le même débit binaire (105, 113),
- le passage du débit binaire de la connexion transparente d'un premier débit binaire à un deuxième débit binaire,
- la commutation d'au moins certains parmi l'ensemble des paquets de données transmis par la connexion opaque de nouveau vers la connexion transparente au deuxième débit binaire (110, 118).

2. Procédé selon la revendication 1 dans lequel la modification d'un débit binaire de la connexion transparente est déclenchée lorsque la qualité du signal dans le noeud de destination est inférieure à un premier seuil ou supérieure à un deuxième seuil pendant une durée prédéterminée sur un intervalle de temps prédéterminé (104, 111).

3. Procédé selon la revendication 2 dans lequel le débit binaire est réduit lorsque la qualité du signal est inférieure à un premier seuil prédéfini ($BER_S$) pendant une durée prédéfinie sur un intervalle de temps prédéfini, et est augmenté lorsque la qualité du signal est supérieure à un deuxième seuil prédéfini ($BER_Q$) pendant une durée prédéfinie sur un intervalle de temps prédéfini.

4. Procédé selon la revendication 3 dans lequel le passage du débit binaire de la connexion transparente d'un premier débit à un deuxième débit binaire comprend les étapes suivantes :

si le débit binaire est supérieur à un débit binaire prédéfini minimum pendant une durée prédéfinie sur un intervalle de temps prédéfini, ou respectivement inférieur à un débit binaire prédéfini maximum pendant une durée prédéfinie sur un intervalle de temps prédéfini,

- le débit binaire est réduit (108), ou respectivement augmenté (116), selon une quantité prédéfinie,
- la qualité du signal dans le noeud de destination est mesurée en fonction des signaux de service transmis par ladite connexion transparente (109, 117),
- si la qualité de signal mesurée est supérieure au premier seuil prédéfini, ou respectivement inférieur au deuxième seuil prédéfini, ledit débit binaire de la connexion transparente est attribué au débit binaire obtenu ; sinon, les étapes précédentes sont répétées.

5. Procédé selon la revendication 4 dans lequel la qualité du signal est déterminée en mesurant le taux d'erreur binaire, la qualité du signal étant améliorée, ou respectivement dégradée, lorsque le débit d'erreur binaire diminue, ou augmente respectivement.

6. Procédé selon la revendication 5, chaque fois que le débit binaire est inférieur au débit binaire minimum prédéfini, la connexion est restaurée (103).

7. Procédé selon la revendication 5 ou 6, dans lequel, chaque fois que le débit binaire est supérieur ou égal au débit binaire maximum prédéfini, la connexion n'est pas modifiée.

8. Procédé selon l'une des revendications précédentes, dans lequel, chaque fois qu'un débit binaire de la connexion est réduit, les paquets de données correspondant à la différence de débit binaire sont transmis par une connexion opaque.

9. Dispositif pour transmettre les signaux optiques d'un réseau de communication optique comprenant :

   - des moyens pour générer un signal optique,
   - la réception d'un signal optique,
   - la régénération du signal,
   - la transmission d'un ensemble de paquets de données sans aucune relation temporelle entre eux à des débits binaires prédéterminés sur une connexion transparente ou opaque reliant ensemble les moyens pour générer le signal et les moyens pour recevoir le signal,
   - la mesure de la qualité du signal dans les moyens pour recevoir le signal,
   - la modification d'un débit binaire d'une connexion transparente en fonction de la qualité du signal mesurée dans les moyens pour recevoir un signal, **caractérisé en ce qu'**il comprend les étapes suivantes :

     - commuter tous les paquets de données transmis par la connexion transparente à un premier débit binaire vers une connexion opaque ayant le même débit binaire,
     - passer le débit binaire de la connexion transparente d'un premier débit binaire à un deuxième débit binaire,
     - commuter au moins certains des paquets de données transmis par la connexion opaque de nouveau vers la connexion transparente au deuxième débit binaire.

10. Dispositif selon la revendication 9, dans lequel les moyens pour modifier le débit binaire de la connexion transparente comprennent les étapes suivantes :

    - comparer la valeur du débit binaire de la connexion à au moins une valeur de débit binaire prédéfini, extrême,
    - modifier le débit binaire de la connexion transparente selon une quantité prédéfinie,
    - générer et transmettre des signaux de service sur ladite connexion transparente,
    - déterminer la qualité du signal sur ladite connexion transparente à partir des signaux de service,
    - comparer la qualité du signal mesurée à partir des signaux de service aux seuils de qualité de signal prédéfinis,
    - sélectionner un nouveau débit binaire de la connexion transparente en fonction de la qualité de signal déterminée sur ladite connexion transparente sur les signaux de service.

11. Dispositif selon la revendication 9 ou 10, dans lequel les moyens pour modifier le débit binaire de la connexion transparente comprennent des transpondeurs à débits binaires adaptatifs.

Fig.1

Fig.2

**Fig.3**

**Fig.4**

EP 2 522 091 B1

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002071670 A2

**Non-patent literature cited in the description**

- **B. RAMAMURTHY et al.** Transparent vs. opaque vs. translucent wavelength-routed optical networks. *proc. OFC/IOOC '99,* 21 February 1999, vol. 1, 59-61